# EUROPEAN PATENT APPLICATION

(11) **EP 4 618 663 A1**
(43) Date of publication of application: **17.09.2025**
(21) Application number: 23910142.1
(22) Date of filing: 13.12.2023
(51) Int. Cl.: H04W 72/044

(54) **COMMUNICATION METHOD AND APPARATUS**

(30) Priority: 30.12.2022 CN 202211734734
(71) Applicant: Huawei Technologies Co., Ltd., Shenzhen, Guangdong 518129 (CN)
(72) Inventor: XU, Kai, Shenzhen, Guangdong 518129 (CN); HUANG, Hui, Shenzhen, Guangdong 518129 (CN); GAO, Hui, Shenzhen, Guangdong 518129 (CN); LI, Li, Shenzhen, Guangdong 518129 (CN); JIN, Keqiong, Shenzhen, Guangdong 518129 (CN); WANG, Zhizhan, Shenzhen, Guangdong 518129 (CN)
(74) Representative: Goddar, Heinz J.
(86) International application number: PCT/CN2023/138408
(87) International publication number: WO 2024/140212

(57) **Abstract**

A communication method and apparatus are provided, to reduce analog beam sweeping complexity, and select an analog beam that matches current network load. N analog beams are determined within a first time period, the N analog beams are swept within a second time period, and an analog beam to be scheduled in a first slot is determined from the N analog beams. The N analog beams are a part of M analog beams, and the M analog beams are beams available to an access network device. The second time period follows the first time period, and the second time period is adjacent to the first time period. In this way, a part of analog beams can be swept within the second time period, without a need to constantly to perform sweeping on a larger quantity (that is, M) of analog beams, so that a quantity of beams to be swept is reduced, complexity is reduced, and an analog beam that accurately matches current network load can be selected, to improve accuracy of a service analog beam.

## Description

### CROSS-REFERENCE TO RELATED APPLICATIONS

This application claims priority to Chinese Patent Application No. 202211734734.3, filed with the China National Intellectual Property Administration on December 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In recent years, with wide application of technologies, such as internet of vehicles, internet of things, and virtual reality, a volume of to-be-transmitted data has increased explosively, and the current information society has transitioned into an era of big data. A 5th generation (5th generation, 5G) communication system having advantages of ultra-high traffic density, ultra-low latency user experience, ultra-high connection density, and the like has become the most mainstream mobile communication technology currently, and is also a next-generation broadband wireless communication technology. A massive multiple-input multiple-output (massive multiple-input multiple-output, massive MIMO) system having outstanding advantages in improving a system capacity and frequency utilization has become a core technology of 5G accordingly.

It may be learned from the name of massive MIMO that the massive MIMO has a larger scale than conventional MIMO. For example, MIMO hardware commonly used in a long term evolution time division duplex (long term evolution time division duplex, LTE TDD) system usually has two/four/eight antennas, but a quantity of channels in the massive MIMO may be doubled or larger on this basis, and may reach 64/128, even 256 or a larger value. In addition, the conventional MIMO is 2D-MIMO. In actual signal coverage, a transmit beam of the MIMO is similar to a plane, and is adjusted only in a horizontal direction, and cannot be adjusted in a vertical direction. The massive MIMO can implement precise three-dimensional beamforming, and support beam adjustment in a vertical dimension as well as a horizontal dimension, to provide better interference suppression and multiplexing capability.

Although the current massive MIMO has a more accurate beamforming capability in comparison with the conventional MIMO technology, how to accurately adjust a beam direction of the current massive MIMO based on current network load is still an extremely difficult problem. Currently, there are three main beamforming manners: digital beamforming, analog beamforming, and hybrid beamforming. The digital beamforming needs a large quantity of digital radio frequency links, and each physical antenna corresponds to one digital radio frequency link. As a result, a hardware design is complex, and costs are extremely high. In comparison with the digital beamforming, the analog beamforming has the following advantages: Costs are low, and a plurality of physical antennas share a set of digital radio frequency links. However, the analog beamforming also has a significant disadvantage: Only a signal phase can be changed, but an amplitude of a transmit signal cannot be changed, making a beamforming effect limited. In view of this, a hybrid beamforming technology emerges. This beamforming manner, by combining the advantages of the digital beamforming and the analog beamforming, can reduce a quantity of digital radio frequency links while ensuring adjustability of a signal amplitude and phase. However, in the current hybrid beamforming technology, channel sounding has to be performed on all analog beams, resulting in high complexity, and there lacks an accurate beam selection policy.

### SUMMARY

This application provides a communication method and apparatus, to reduce analog beam sweeping complexity, and select a good service analog beam that matches current network load.

According to a first aspect, this application provides a communication method. The method may be applied to an access network device, a functional module in the access network device, or a processor, a chip, or the like in the access network device. An example in which the method is applied to the access network device is used for description. The method may include: The access network device determines N analog beams within a first time period, performs sweeping on the N analog beams within a second time period, and determines, from the N analog beams, an analog beam to be scheduled in a first slot. The N analog beams are a part of M analog beams, the M analog beams are beams available to the access network device, N is an integer greater than or equal to 1, and M is an integer greater than or equal to 1. The second time period follows the first time period, and the second time period is adjacent to the first time period.

Based on the foregoing method, the access network device may perform sweeping on a part of analog beams within the second time period, without a need to constantly perform sweeping on a larger quantity (that is, M) of analog beams, so that a quantity of beams to be swept is reduced, complexity is reduced, and an analog beam that accurately matches current network load can be selected, to improve accuracy of a service analog beam.

In a possible design, the access network device may determine the N analog beams within the first time period by using the following method: The access network device determines, within the first time period, a user proportion or a transmitted data volume proportion of at least one of the M analog beams, sorts the at least one analog beam in descending order of the user proportion or the transmitted data volume proportion, and determines the first N sorted analog beams as the N analog beams. In this way, the access network device may perform sweeping on, within the second time period, a beam with a high user proportion or a high transmitted data volume proportion, to ensure communication performance.

In a possible design, the method in which the access network device determines, within the first time period, the user proportion or the transmitted data volume proportion of the at least one of the M analog beams may be as follows: The access network device determines a first analog beam for a terminal device based on first parameters of the terminal device regarding different analog beams, and determines the user proportion of the at least one analog beam based on a corresponding quantity of terminal devices in the case of the at least one analog beam serving as the first analog beam, or determines the transmitted data volume proportion of the at least one analog beam based on a corresponding sum of transmitted data volumes of terminal devices in the case of the at least one analog beam serving as the first analog beam. In this way, the user proportion or the transmitted data volume proportion of the analog beam may be accurately determined, so that N beams swept within the second time period are accurately determined.

In a possible design, the first parameters may be reference signal strength. The method in which the access network device determines the first analog beam for the terminal device based on the first parameters of the terminal device regarding the different analog beams may be as follows: The access network device determines an analog beam with greatest reference signal strength of the terminal device as the first analog beam for the terminal device. In this way, the access network device may determine the first analog beam for the terminal device based on the reference signal strength of the terminal device.

In a possible design, the first parameters may be one or more of the following: a channel quality indicator, a matrix rank indicator, or a signal-to-noise ratio.

In a possible design, the method in which the access network device determines the first analog beam for the terminal device based on the first parameters of the terminal device regarding the different analog beams may be as follows: The access network device determines spectral efficiency of the different analog beams based on the first parameters of the terminal device regarding the different analog beams, and determines an analog beam with highest spectral efficiency as the first analog beam for the terminal device. In this way, the access network device may accurately determine the first analog beam for the terminal device.

In a possible design, the access network device may determine the N analog beams within the first time period by using the following method: The access network device may determine, within the first time period, that the N analog beams include a first analog beam for a first terminal device. In this way, communication performance of a terminal device with a high user level can be ensured.

In a possible design, the access network device may determine, within the first time period based on a second parameter, whether the first terminal device is within a first position range; and if the first terminal device is not within the first position range, the access network device may determine that the M analog beams are all narrow beams; or if the first terminal device is within the first position range, the access network device may determine that the M analog beams include a narrow beam and a wide beam. In this way, the access network device may implement adaptive selection between the wide beam and the narrow beam depending on whether a user is at a near point, to ensure user experience and far-point coverage.

In a possible design, the second parameter may be one or more of the following: reference signal strength, multipath angular spread, a path loss, a channel quality indicator, a matrix rank indicator, or a signal-to-noise ratio.

In a possible design, the access network device may separately determine spectral efficiency of the first terminal device regarding the M analog beams, and determine an analog beam with highest spectral efficiency from the M analog beams as the first analog beam for the first terminal device. Alternatively, the access network device may determine an analog beam with greatest reference signal strength of the first terminal device as the first analog beam for the first terminal device. In this way, the access network device may accurately determine the first analog beam for the first terminal device, so that sweeping is performed within the second time period.

In a possible design, the method in which the access network device separately determines the spectral efficiency of the first terminal device regarding the M analog beams may be as follows: The access network device separately determines the spectral efficiency of the first terminal device regarding the M analog beams based on one or more of the following parameters: a channel quality indicator, a matrix rank indicator, or a signal-to-noise ratio of the first terminal device. In this way, the access network device may accurately determine the spectral efficiency of the first terminal device regarding the M analog beams.

In a possible design, the method in which the access network device determines, from the N analog beams, the analog beam to be scheduled in the first slot may be as follows: The access network device determines whether first analog beams corresponding to a plurality of terminal devices are the same; and if the first analog beams are the same, the access network device may use the same first analog beam as the analog beam to be scheduled in the first slot; or if the first analog beams are different, the access network device determines, based on a transmitted data volume corresponding to the N analog beams, the analog beam to be scheduled in the first slot. In this way, in different slots, the access network device may adaptively select, based on correlation among a plurality of users and a channel characteristic, analog beams to be scheduled in the different slots, to achieve good communication performance.

In a possible design, the method in which the access network device determines, based on the transmitted data volume corresponding to the N analog beams, the analog beam to be scheduled in the first slot may be as follows: The access network device separately determines a terminal device group that corresponds to at least one of the N analog beams and that is to be scheduled in the first slot; and the access network device determines a total transmitted data volume of the terminal device group corresponding to the at least one analog beam, and determines an analog beam corresponding to a largest total transmitted data volume as the analog beam to be scheduled in the first slot. In this way, the access network device may accurately select the analog beam to be scheduled in the first slot, to achieve good communication performance.

In a possible design, the method in which the access network device determines the total transmitted data volume of the terminal device group corresponding to the at least one analog beam may be as follows: The access network device determines a transmitted data volume of at least one terminal device in the terminal device group based on at least one of a channel quality indicator, a matrix rank indicator, or a signal-to-noise ratio of the at least one terminal device, and the access network device determines the total transmitted data volume of the terminal device group based on the transmitted data volume of the at least one terminal device. In this way, the access network device may accurately determine a corresponding transmitted data volume based on a channel characteristic of the terminal device, to accurately select the analog beam to be scheduled in the first slot.

According to a second aspect, this application further provides a communication apparatus. The communication apparatus may be an access network device, a functional module in the access network device, or a processor, a chip, or the like in the access network device. The communication apparatus has a function of implementing the first aspect or the possible design examples of the first aspect. The function may be implemented by hardware, or may be implemented by hardware executing corresponding software. The hardware or the software includes one or more modules corresponding to the foregoing function.

In a possible design, a structure of the communication apparatus includes a processing unit, and optionally, may further include a communication unit and/or a storage unit. These units may perform corresponding functions in the first aspect or the possible design examples of the first aspect. For details, refer to the detailed descriptions in the method examples. Details are not described herein again.

In a possible design, a structure of the communication apparatus includes a processor, and optionally, further includes a transceiver and/or a memory. The transceiver is configured to: receive and send a signal or data, and communicate and interact with another device in a communication system. The processor is configured to support the communication apparatus in performing corresponding functions in the first aspect or the possible design examples of the first aspect. The memory is coupled to the processor, and the memory stores program instructions and data that are necessary for the communication apparatus.

According to a third aspect, an embodiment of this application provides a communication system. The communication system may include an access network device, and the access network device may be configured to perform an operation and the like performed by the access network device in the method according to any one of the first aspect and the possible designs of the first aspect.

In a possible design, the communication system may further include a terminal device and the like.

According to a fourth aspect, an embodiment of this application provides a computer-readable storage medium. The computer-readable storage medium stores program instructions, and when the program instructions are run on a computer, the computer is enabled to perform the method according to any one of the first aspect and the possible designs of the first aspect in embodiments of this application. For example, the computer-readable storage medium may be any usable medium that can be accessed by the computer. By way of example, but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store expected program code in a form of instructions or a data structure and that can be accessed by the computer.

According to a fifth aspect, an embodiment of this application provides a computer program product, including computer program code or instructions. When the computer program code or the instructions are run on a computer, the method according to any one of the first aspect or the possible designs of the first aspect is performed.

According to a sixth aspect, this application further provides a chip, including a processor. The processor is coupled to a memory, and is configured to read and execute program instructions stored in the memory, to enable the chip to implement the method according to any one of the first aspect or the possible designs of the first aspect.

For each of the second aspect to the sixth aspect and technical effects that may be achieved in the aspect, refer to descriptions of the technical effects that may be achieved in the first aspect or the possible solutions of the first aspect. Details are not described herein again.

### BRIEF DESCRIPTION OF DRAWINGS

FIG. 1 is a diagram of an architecture of a communication system according to this application;
FIG. 2 is a diagram of an architecture of HBF in massive MIMO according to this application;
FIG. 3 is a flowchart of a communication method according to this application;
FIG. 4 is a diagram in which an access network device periodically determines N analog beams within a first time period, and performs sweeping on the N analog beams within a second time period according to this application;
FIG. 5 is a diagram of different cases of at least one of N analog beams according to this application;
FIG. 6 is a flowchart of an example communication method according to this application;
FIG. 7 is a flowchart of another example communication method according to this application;
FIG. 8 is a flowchart of another example communication method according to this application;
FIG. 9 is a diagram of a structure of a communication apparatus according to this application; and
FIG. 10 is a diagram of a structure of a communication apparatus according to this application.

### DESCRIPTION OF EMBODIMENTS

The following further describes in detail this application with reference to the accompanying drawings.

Embodiments of this application provide a communication method and apparatus, to reduce a quantity of analog beams to be swept and complexity. The method and the apparatus in this application are based on a same technical concept. Because problem-resolving principles of the method and the apparatus are similar, mutual reference may be made to implementations of the apparatus and the method. Repeated descriptions are not described.

For ease of understanding, the following describes some terms used in embodiments of this application.

(1) Beam (beam): A beam refers to a special directional sending or receiving effect formed by a transmitter or a receiver of a network device or a terminal device through an antenna array. This is similar to how a flashlight converges light in a single direction to form a light beam. Signal sending and receiving in a form of beam can effectively increase a signal transmission distance.

The beam may be a wide beam, a narrow beam, or another type of beam. A technology for forming the beam may be a beamforming technology or another technology. The beamforming technology may be specifically a digital beamforming technology, an analog beamforming technology, a hybrid digital/analog beamforming technology, or the like.

In a communication protocol, a beam may be specifically represented as a digital beam, an analog beam, a spatial domain filter (spatial domain filter), a spatial filter (spatial filter), a spatial parameter (spatial parameter), a TCI, a TCI-state, or the like. A beam for sending a signal may be referred to as a transmission beam (transmission beam, or Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), or the like. A beam used for receiving a signal may be referred to as a reception beam (reception beam, or Rx beam), a spatial domain reception filter (spatial domain reception filter), a spatial reception filter (spatial reception filter), a spatial domain reception parameter (spatial domain reception parameter), a spatial reception parameter (spatial reception parameter), or the like. It should be understood that the beam in this application may be replaced with another equivalent concept, and is not limited to the foregoing concept.

(2) In descriptions of this application, terms such as "first" and "second" are merely used for distinguishing and description, but should not be understood as indicating or implying relative importance, or should not be understood as indicating or implying a sequence.

(3) In the descriptions of this application, "at least one (type)" means one or more (types), and "a plurality of (types)" means two or more (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.

(4) In the descriptions of this application, the term "and/or" describes an association relationship between associated objects, and indicates that three relationships may exist. For example, A and/or B may indicate the following cases: Only A exists, both A and B exist, and only B exists, where A and B may be singular or plural. In addition, "/" indicates "or". For example, a/b indicates a or b.

To describe the technical solutions in embodiments of this application more clearly, the following describes the communication method and apparatus provided in embodiments of this application in detail with reference to the accompanying drawings.

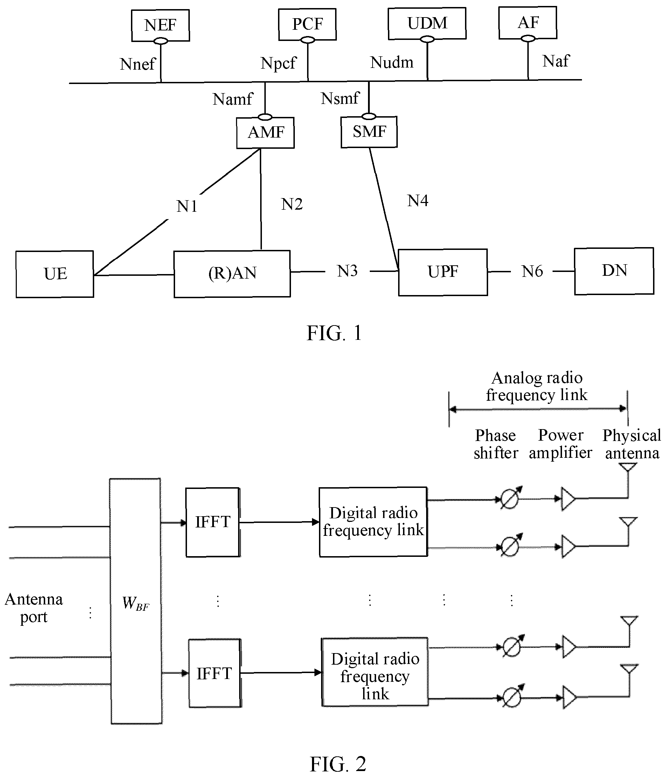

FIG. 1 shows a possible architecture of a communication system to which a communication method provided in this application is applicable. The architecture of the communication system may include a radio access network, a terminal device, and a core network. For example, in the architecture of the communication system, the radio access network may include an access network device. The core network may include a network exposure function (network exposure function, NEF) network element, a policy control function (policy control function, PCF) network element, a unified data management (unified data management, UDM) function network element, an application function (application function, AF) network element, an access and mobility management function (access and mobility management function, AMF) network element, a session management function (session management function, SMF) network element, and a user plane function (user plane function, UPF) network element. The AMF network element may be connected to the access network device through an N2 interface, the access network device may be connected to the UPF through an N3 interface, the SMF may be connected to the UPF through an N4 interface, and the AMF network element may be connected to the UE through an N1 interface. An interface name is merely an example for description. This is not specifically limited in this embodiment of this application. It should be understood that this embodiment of this application is not limited to the communication system shown in FIG. 1. Names of the network elements shown in FIG. 1 are merely used as examples for description herein, and are not intended to limit the network elements included in the architecture of the communication system to which the method in this application is applicable. Functions of the network elements or devices in the communication system are described in detail below.

The terminal device may also be referred to as user equipment (user equipment, UE), a mobile station (mobile station, MS), a mobile terminal (mobile terminal, MT), or the like, and is a device that provides a user with voice and/or data connectivity. For example, the terminal device may include a handheld device having a wireless connection function and a vehicle-mounted device. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In FIG. 1, the terminal device is shown as UE, which is merely used as an example. No limitation is imposed on the terminal device.

The (R)AN device is a device that provides access for the terminal device, and includes a radio access network (radio access network, AN) device and an access network (access network, AN) device. The RAN device is mainly a wireless network device in a 3GPP network, and the AN device may be a non-3GPP-defined access network device. The RAN device is mainly responsible for functions such as radio resource management, quality of service (quality of service, QoS) management, and data compression and encryption on an air interface side. The access network device may include base stations in various forms, for example, a macro base station, a micro base station (also referred to as a small cell), a relay station, and an access point. The access network device in this embodiment of this application may be an evolved NodeB (evolved NodeB, eNB) in a 4G system, may be a next-generation NodeB (next-generation NodeB, gNB) in a 5G system, may be a base station in a 6G system, may be a base station in another system evolved after 5G, or may be an access network device in an open access network (open RAN, ORAN) system, a module of the access network device, or the like. Specifically, the access network device may include but is not limited to: a home base station (for example, a home evolved NodeB, or a home NodeB, HNB), a baseband unit (baseband unit, BBU), a wireless relay node, a wireless backhaul node, a transmission point (transmission point, TP), or a transmission reception point (transmission reception point, TRP), or one antenna panel or a group of antenna panels (including a plurality of antenna panels) of a base station in a 5G mobile communication system. Alternatively, the access network device may be a module or a unit that can implement a part of functions of the access network device. For example, the access network device may be a central unit (central unit, CU), a distributed unit (distributed unit, DU), a CU-control plane (control plane, CP), a CU-user plane (user plane, UP), or a radio unit (radio unit, RU). For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from the information at the PHY layer. Therefore, in this architecture, higher layer signaling such as RRC layer signaling or PHCP layer signaling may also be considered as being sent by the DU or sent by the DU and the RU. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU (or the CU-CP and the CU-UP), the DU, or the RU may also have different names, but a person skilled in the art may understand meanings of the names. In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

The access and mobility management function network element may be configured for access control and mobility management of a terminal device. During actual application, the access and mobility management function network element includes a mobility management function of a mobility management entity (mobility management entity, MME) in a long term evolution (long term evolution, LTE) network architecture, and includes an access management function. The access and mobility management function network element may be specifically responsible for registration of the terminal device, mobility management, a tracking area update procedure, reachability detection, selection of a session management function network element, mobility state transition management, and the like. For example, in 5G, the access and mobility management function network element may be an AMF network element, for example, as shown in FIG. 1. In future communication, for example, in 6G, the access and mobility management function network element may still be the AMF network element or have another name. This is not limited in this application. When the access and mobility management function network element is the AMF network element, the AMF may provide an Namf service.

The session management function network element may be configured to be responsible for session management (including session establishment, modification, and release) of the terminal device, selection and reselection of a user plane function network element, internet protocol (internet protocol, IP) address allocation of the terminal device, quality of service (quality of service, QoS) control, and the like. For example, in 5G, the session management function network element may be an SMF network element, for example, as shown in FIG. 1. In future communication, for example, in 6G, the session management function network element may still be the SMF network element or have another name. This is not limited in this application. When the session management function network element is the SMF network element, the SMF may provide an Nsmf service.

The user plane function network element is responsible for user data forwarding and receiving in the terminal device. The user plane function network element may receive user data from a data network, and transmit the user data to the terminal device via an access network device. The UPF network element may further receive the user data from the terminal device through the access network device, and forward the user data to the data network. Transmission resources and scheduling functions that are used by the UPF network element to provide services for the terminal device are managed and controlled by the SMF network element. For example, in 5G, the user plane function network element may be a UPF network element, for example, as shown in FIG. 1. In future communication, for example, in 6G, the user plane function network element may still be the UPF network element or have another name. This is not limited in this application.

The policy control function network element mainly supports a unified policy framework to control network behavior and provides policy rules for a control plane network function, and is responsible for obtaining user subscription information related to policy decisions. For example, in 5G, the policy control function network element may be a PCF network element, for example, as shown in FIG. 1. In future communication, for example, in 6G, the policy control function network element may still be the PCF network element or have another name. This is not limited in this application. When the policy control function network element is the PCF network element, the PCF network element may provide an Npcf service.

The network exposure function network element mainly supports secure interaction between the 3GPP network and a third-party application. For example, in 5G, the network exposure function network element may be an NEF network element, for example, as shown in FIG. 1. In future communication, for example, in 6G, the network exposure function network element may still be the NEF network element or have another name. This is not limited in this application. When the network exposure function network element is the NEF, the NEF may provide an Nnef service for another network function network element.

The application function network element mainly supports interacting with a 3GPP core network to provide services, for example, affecting data routing decision and a policy control function, or providing some third-party services for a network side. For example, in 5G, the application function network element may be an AF network element, for example, as shown in FIG. 1. In future communication, for example, in 6G, the application function network element may still be the AF network element or have another name. This is not limited in this application. When the application function network element is the AF network element, the AF network element may provide an Naf service.

The unified data management function network element is configured for generation of authentication credentials, user identification handling (for example, storage and management of permanent user identifiers), access authorization control, subscription data management, and the like. For example, in 5G, the unified data management function network element may be a UDM network element, for example, as shown in FIG. 1. In future communication, for example, in 6G, the unified data management function network element may still be the UDM network element or have another name. This is not limited in this application. When the unified data management function network element is the UDM network element, the UDM network element may provide an Nudm service.

The data network (data network, DN) is a service network that provides a data transmission service for a user, for example, an IP multimedia service (IP multimedia service, IMS) or an internet (internet).

The UE accesses the DN by using a protocol data unit (protocol data unit, PDU) session established between the UE and the DN.

Each network element in the core network may also be referred to as a functional entity or device, and may be a network element implemented on dedicated hardware, a software instance running on dedicated hardware, or an instance of a virtualized function on an appropriate platform. For example, a virtualization platform may be a cloud platform.

It should be noted that the architecture of the communication system shown in FIG. 1 is not limited to including only the network elements shown in the figure, and may further include another device not shown in the figure. Examples are not listed herein in this application one by one.

It should be noted that a distribution form of the network elements is not limited in embodiments of this application. The distribution form shown in FIG. 1 is merely an example, and is not limited in this application.

For ease of description, in this application, the network elements shown in FIG. 1 are used as examples for description below, and an XX network element is directly referred to as XX for short. For example, the SMF network element is referred to as an SMF for short. It should be understood that names of all network elements in this application are merely used as examples, and may also be referred to as other names in future communication, or the network element in this application may be replaced by another entity or device that has a same function in future communication. This is not limited in this application. Unified descriptions are provided herein, and details are not described below again.

It should be noted that the communication system shown in FIG. 1 does not constitute a limitation on a communication system to which embodiments of this application are applicable. The architecture of the communication system shown in FIG. 1 is a 5G system architecture. Optionally, the method in embodiments of this application is further applicable to various future communication systems, for example, a 6G or another communication network.

In recent years, with wide application of technologies, such as an internet of vehicles, an internet of things, and virtual reality, a volume of to-be-transmitted data has increased explosively, and the current information society has transitioned into an era of big data. A 5G communication system, having advantages such as ultra-high traffic density, ultra-low latency user experience, and ultra-high connection density has become the most mainstream mobile communication technology currently, and is also a next-generation broadband wireless communication technology. A massive multiple-input multiple-output (massive multiple-input multiple-output, massive MIMO) system having outstanding advantages in improving a system capacity and frequency utilization has become a core technology of 5G accordingly. The massive MIMO can implement precise three-dimensional beamforming, and support beam adjustment in a horizontal dimension and a vertical dimension, to provide better interference suppression and a multiplexing capability.

For example, FIG. 2 shows an architecture of hybrid beamforming (hybrid beamforming, HBF) in massive MIMO to which an embodiment of this application is applicable. A hybrid beamforming manner combines advantages of two beamforming manners: digital beamforming and analog beamforming. For example, in the digital beamforming, a signal amplitude and phase can be adjusted arbitrarily, and the analog beamforming has low forming costs, and a plurality of physical antennas share one set of digital radio frequency links. The hybrid beamforming can reduce a quantity of digital radio frequency links when it is ensured that a signal amplitude and phase are adjustable.

In a current HBF technology, channel sounding needs to be performed on all analog beams, complexity is high, and an accurate beam selection policy is lacking. In view of this, embodiments of this application provide a communication method, to reduce a quantity of analog beams to be swept, reduce complexity, and accurately select a service analog beam that matches current network load.

In the following embodiments, the communication method provided in this application is described in detail by using an access network device as an example. It should be understood that an operation performed by the access network device may also be implemented by using a processor in the access network device, a chip, a chip system, a functional module, or the like. This is not limited in this application. For example, the following operations performed by the access network device in step 301 to step 303 may also be described as being performed by a DU, and some parameters and the like used when the DU performs step 301 to step 303 may also be provided by a CU and/or an RU. Examples are not listed in this application one by one.

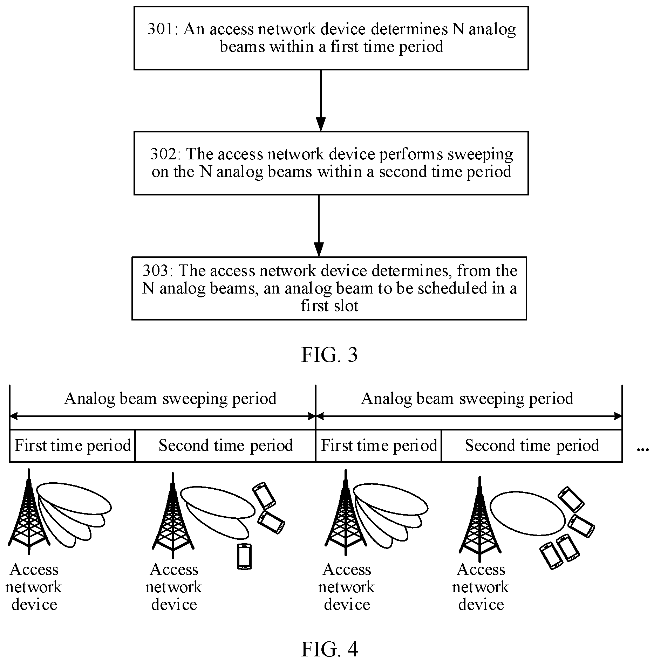

Based on the foregoing descriptions, an embodiment of this application provides a communication method. As shown in FIG. 3, a procedure of the method may include the following steps.

Step 301: An access network device determines N analog beams within a first time period. The N analog beams are a part of M analog beams. The M analog beams are beams available to the access network device, N is an integer greater than or equal to 1, and M is an integer greater than or equal to 1.

Optionally, the access network device performs sweeping on the M analog beams within the first time period, and determines the N analog beams from the M swept analog beams.

Optionally, the M analog beams may be all beams available to the access network device, or may be a part of all beams available to the access network device. This is not limited in this application.

Step 302: The access network device performs sweeping on the N analog beams within a second time period. The second time period follows the first time period, and the second time period is adjacent to the first time period.

Step 303: The access network device determines, from the N analog beams, an analog beam to be scheduled in a first slot.

Based on the foregoing method, the access network device may perform sweeping on a part of analog beams within the second time period, without a need to constantly perform sweeping on a larger quantity (that is, M) of analog beams, so that a quantity of beams to be swept is reduced, complexity is reduced, and an analog beam that accurately matches current network load can be selected, to improve accuracy of a service analog beam.

Optionally, the first time period and the second time period may form an analog beam sweeping period. The access network device may periodically determine the N analog beams within the first time period, and perform sweeping on the N analog beams within the second time period, as shown in FIG. 4. It should be understood that, based on an actual situation, in different analog beam sweeping periods, M analog beams swept by the access network device within first time periods of the different analog beam sweeping periods may be different or may be the same, and N analog beams swept within second time periods may be different or may be the same. This is not limited in this application.

Optionally, the first time period, the second time period, or the analog beam sweeping period may be implemented by using a timer.

For example, the first time period may be referred to as a detection period or another name, and the second time period may be referred to as a steady-state period or another name. This is not limited in this application.

Optionally, a length of the first time period and a length of the second time period, and a relationship between duration of the first time period and duration of the second time period are not limited in this application.

In a possible implementation, the access network device may determine the N analog beams within the first time period by using the following method: The access network device determines, within the first time period, a user proportion or a transmitted data volume proportion of at least one of the M analog beams, sorts the at least one analog beam in descending order of the user proportion or the transmitted data volume proportion, and determines the first N sorted analog beams as the N analog beams. The at least one of the M analog beams may be each of the M analog beams, or may be one or more of the M analog beams (that is, a part of the M analog beams).

Optionally, the access network device may determine the user proportion of the at least one of the M analog beams within the first time period by using the following method: The access network device determines a first analog beam for a terminal device based on first parameters of the terminal device regarding different analog beams, and the access network device determines the user proportion of the at least one analog beam based on a corresponding quantity of terminal devices in the case of the at least one analog beam serving as the first analog beam.

Optionally, the access network device may determine the transmitted data volume proportion of the at least one of the M analog beams within the first time period by using the following method: The access network device determines a first analog beam for a terminal device based on first parameters of the terminal device regarding different analog beams, and the access network device determines the transmitted data volume proportion of the at least one analog beam based on a corresponding sum of transmitted data volumes of terminal devices in the case of the at least one analog beam serving as the first analog beam.

There may be one or more terminal devices.

In this application, the first analog beam may be a beam with optimal performance, or a beam with suboptimal performance, or a beam that meets another performance condition. This is not limited in this application. One terminal device corresponds to one first analog beam, and first analog beams for different terminal devices may be the same or may be different.

For example, a user proportion of an analog beam may be a ratio of a corresponding quantity of terminal devices in the case of the analog beam serving as a first analog beam to a total quantity of terminal devices.

For example, a transmitted data volume proportion of an analog beam may be a ratio of a corresponding sum of transmitted data volumes of terminal devices in the case of the analog beam serving as a first analog beam to a total transmitted data volume of the terminal devices.

In an example, based on different first parameters, that the access network device determines the first analog beam for the terminal device based on the first parameters of the terminal device regarding the different analog beams may include the following methods:
Method a1: The first parameters may be reference signal strength, for example, channel sounding pilot signal reference signal received power (sounding reference signal reference signal received power, SRS RSRP); and the method in which the access network device determines the first analog beam for the terminal device based on the first parameters of the terminal device regarding the different analog beams may be as follows: The access network device determines an analog beam with greatest reference signal strength of the terminal device as the first analog beam for the terminal device.
Method a2: The first parameters may be one or more of the following: a channel quality indicator (channel quality indicator, CQI), a matrix rank indicator (rank indicator, RI), or a signal-to-noise ratio; and the method in which the access network device determines the first analog beam for the terminal device based on the first parameters of the terminal device regarding the different analog beams may be as follows: The access network device determines spectral efficiency of the different analog beams based on the first parameters of the terminal device regarding the different analog beams, and determines an analog beam with highest spectral efficiency as the first analog beam for the terminal device.

For example, the access network device may perform modulation and coding scheme (modulation and coding scheme, MCS) and secondary rank (rank) calculation based on CQIs and RIs of the terminal device regarding different analog beams, to determine spectral efficiency corresponding to the terminal device regarding the different analog beams.

It should be noted that, in addition to the foregoing examples of the first parameters, the first parameters may be other parameters, and correspondingly, the first analog beam for the terminal device is determined by using another method. This is not limited in this application.

In an optional implementation, the access network device may determine, within the first time period, that the N analog beams include a first analog beam for a first terminal device. In this way, data transmission of a terminal device with a high user priority can be ensured.

When N is 1, it indicates that the access network device performs sweeping on the first analog beam for the first terminal device within the second time period. This may represent a single-user scenario. When N is greater than 1, it indicates that the access network device performs sweeping on the first analog beam for the first terminal device and an analog beam for another terminal device within the second time period. This may represent a multi-user scenario. In the multi-user scenario, it is ensured that the first analog beam for the first terminal device is swept.

Optionally, the access network device determines an analog beam with greatest reference signal strength of the first terminal device as the first analog beam for the first terminal device.

Optionally, the access network device may alternatively separately determine spectral efficiency of the first terminal device regarding the M analog beams, and determine an analog beam with highest spectral efficiency from the M analog beams as the first analog beam for the first terminal device. Optionally, the spectral efficiency may also be described as data transmission efficiency, or the like.

For example, the access network device may separately determine the spectral efficiency of the first terminal device regarding the M analog beams based on one or more of the following parameters: a channel quality indicator, a matrix rank indicator, or a signal-to-noise ratio of the first terminal device.

For example, the access network device may separately determine the spectral efficiency of the first terminal device regarding the M analog beams based on channel quality indicators and/or matrix rank indicators of the first terminal device regarding the M analog beams.

For another example, the access network device may separately determine the spectral efficiency of the first terminal device regarding the M analog beams based on a signal-to-noise ratio of the first terminal device regarding the M analog beams.

In an example, the access network device may determine, within the first time period based on a second parameter, whether the first terminal device is within a first position range (which may also be understood as determining whether the first terminal device is at a near point). If the first terminal device is not within the first position range, the access network device determines that the M analog beams are all narrow beams; or if the first terminal device is within the first position range, the access network device determines that the M analog beams include a narrow beam and a wide beam. In this way, adaptive sending of a wide beam and a narrow beam can be ensured, and user experience and cell edge coverage can be ensured. In this way, the access network device may identify a channel characteristic of the first terminal device, and adaptively select a wide analog beam and a narrow analog beam based on the channel characteristic of the first terminal device, to ensure high-level multipath performance for a near-point user and coverage performance for a far-point user.

Optionally, the second parameter may be reference signal strength (for example, SRS RSRP), multipath angular spread, a CQI, an RI, a path loss, a signal-to-noise ratio (signal to interference plus noise ratio, SINR), or the like.

For example, when the SRS RSRP of the first terminal device is greater than or equal to a first threshold, it may be determined that the first terminal device is within the first position range. The first threshold may be predefined, or may be configured by the access network device.

In an optional implementation, the method in which the access network device determines, from the N analog beams, the analog beam to be scheduled in the first slot may be as follows: The access network device determines whether first analog beams corresponding to a plurality of terminal devices are the same; and if the first analog beams are the same, the access network device uses the same first analog beam as the analog beam to be scheduled in the first slot; or if the first analog beams are different, the access network device determines, based on a transmitted data volume corresponding to the N analog beams, the analog beam to be scheduled in the first slot.

For example, the method in which the access network device determines, based on the transmitted data volume corresponding to the N analog beams, the analog beam to be scheduled in the first slot may be as follows: The access network device determines a terminal device group that corresponds to at least one of the N analog beams and that is to be scheduled in the first slot, and determines a total transmitted data volume of the terminal device group corresponding to the at least one analog beam; and further, the access network device determines an analog beam corresponding to a largest total transmitted data volume as the analog beam to be scheduled in the first slot. The at least one of the N analog beams may be each of the N analog beams, or may be one or more of the N analog beams (that is, a part of the N analog beams).

Optionally, the access network device may determine the total transmitted data volume of the terminal device group corresponding to the at least one analog beam by using the following method: The access network device determines a transmitted data volume of at least one terminal device in the terminal device group based on at least one of a channel quality indicator, a matrix rank indicator, or a signal-to-noise ratio of the at least one terminal device, and the access network device determines the total transmitted data volume of the terminal device group based on the transmitted data volume of the at least one terminal device. The at least one terminal device in the terminal device group may be each terminal device in the terminal device group, or may be one or more terminal devices in the terminal device group (that is, a part of terminal devices in the terminal device group).

For example, the access network device may determine the transmitted data volume of the at least one terminal device in the terminal device group based on a channel quality indicator and/or a matrix rank indicator of the at least one terminal device.

For another example, the access network device may determine the transmitted data volume of the at least one terminal device in the terminal device group based on a signal-to-noise ratio of the at least one terminal device.

In an optional implementation, based on different cases of the at least one of the N analog beams, that the access network device determines the total transmitted data volume of the terminal device group corresponding to the at least one analog beam may be as follows:

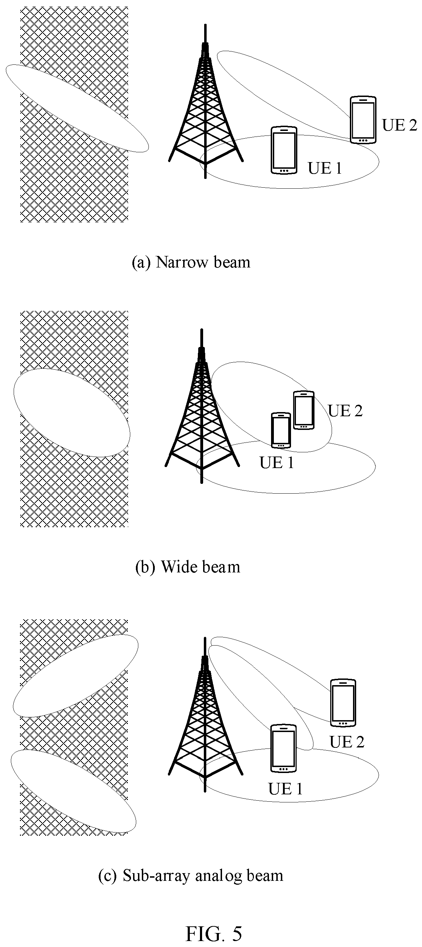

When the at least one analog beam is a narrow beam shown in (a) in FIG. 5, the access network device determines a total transmitted data volume of the terminal device group corresponding to at least one narrow beam;
when the at least one analog beam is a wide beam shown in (b) in FIG. 5, the access network device determines a total transmitted data volume of the terminal device group corresponding to at least one wide beam; or
when the at least one analog beam is a sub-array analog beam shown in (c) in FIG. 5, and different narrow beams are used for different sub-arrays, the access network device determines transmitted data volumes of the terminal device group corresponding to sub-array formed beams that use different narrow beams, to obtain a total transmitted data volume of the terminal device groups corresponding to the sub-array analog beam.

Based on the foregoing communication method, a two-stage sweeping architecture (that is, an architecture of sweeping corresponding analog beams within the first time period and the second time period respectively) is used, and an analog beam solution is adaptively selected based on user performance, so that complexity of analog beam sweeping and performance impact caused by the analog beam sweeping can be reduced, to ensure that an analog beam better matches a user, and HBF can be flexibly applied to different scenarios to obtain an HBF coverage gain.

Based on the foregoing embodiments, the following describes the communication method provided in embodiments of this application in detail by using specific examples.

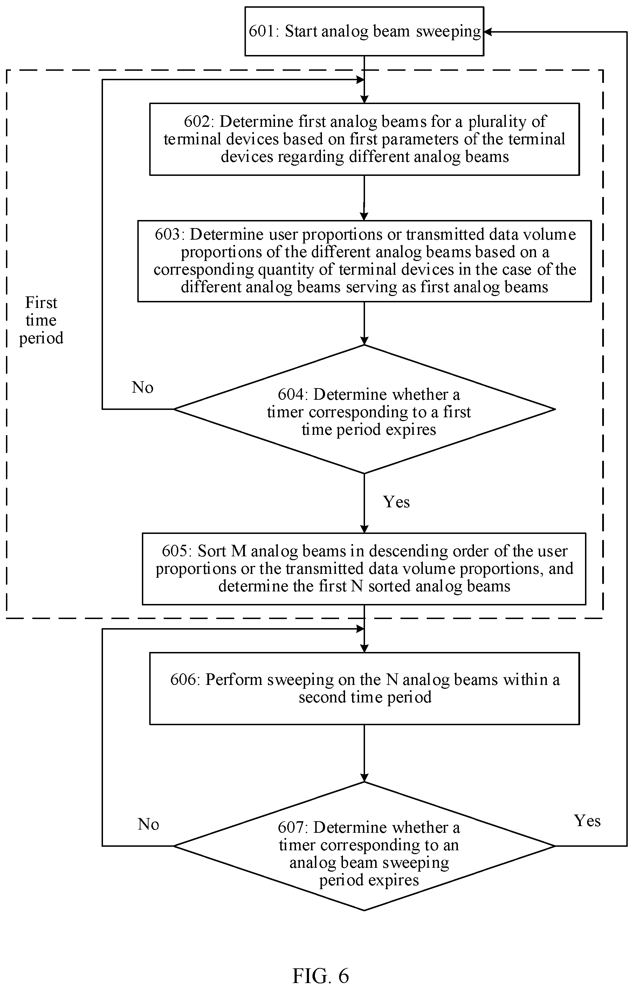

For example, FIG. 6 shows an example communication method. In the example, an access network device may periodically determine N analog beams within a first time period, and perform sweeping on the N analog beams within a second time period. It is assumed that an analog beam sweeping period is implemented by using a first timer, duration of the first timer is T1, the first time period is implemented by using a second timer, and duration of the second timer is T2, so that duration of the second time period may be T1-T2. In the example, the access network device selects, based on distribution of terminal devices in a cell, an analog beam with a high user proportion for sweeping, to reduce a quantity of beams to be swept. Specifically, the access network device periodically triggers analog beam sweeping based on a period T1, and divides the sweeping into two stages. A first stage is a detection period (that is, the first time period), and duration is T2. In this stage, M analog beams are swept, a user proportion or a transmitted data volume proportion of each analog beam is obtained through statistics collection, and distribution of the analog beams in the cell is determined. A second stage is a steady-state period (that is, the second time period), and duration is T1-T2. In this stage, only N analog beams with a high user proportion are swept. Refer to FIG. 6. A specific procedure of the example may include the following steps.

Step 601: The access network device periodically starts analog beam sweeping to perform sweeping on M analog beams.

Step 602: The access network device determines first analog beams for a plurality of terminal devices based on first parameters of the plurality of terminal devices regarding different analog beams.

Specifically, for a method in which the access network device determines the first analog beams for the plurality of terminal devices based on the first parameters of the plurality of terminal devices regarding the different analog beams, refer to related descriptions in the embodiment shown in FIG. 3. Details are not described herein again.

Step 603: The access network device determines user proportions or transmitted data volume proportions of the different analog beams based on a corresponding quantity of terminal devices in the case of the different analog beams serving as the first analog beams.

Step 604: The access network device determines whether a timer corresponding to the first time period expires. If the timer does not expire, the access network device performs step 602 to continue to determine the first analog beams for the terminal devices; or if the timer expires, the access network device performs step 605.

Step 605: The access network device sorts the M analog beams in descending order of the user proportions or the transmitted data volume proportions, and determines the first N sorted analog beams.

Step 606: The access network device enters the second time period, and performs sweeping on the N analog beams within the second time period.

Step 607: The access network device determines whether a timer corresponding to the analog beam sweeping period expires. If the timer expires, the access network device performs step 601 again; otherwise, step 606 is performed again to perform sweeping on the N analog beams within the second time period.

Based on the method in the example, the access network device periodically performs sweeping on analog beams, determines an attributed analog beam of the terminal device based on a specific criterion, and collects statistics on user beam distribution in a cell, to select an analog weight (that is, a weight of a phase shifter in a hybrid beamforming structure) that needs to be sent. In the steady-state period, only an analog beam with a high user proportion is swept. Through two-stage sweeping including the detection period and the steady-state period, a quantity of required analog beams is adaptively determined to avoid sweeping all analog beams, so that a quantity of beams to be swept is reduced, and complexity is reduced.

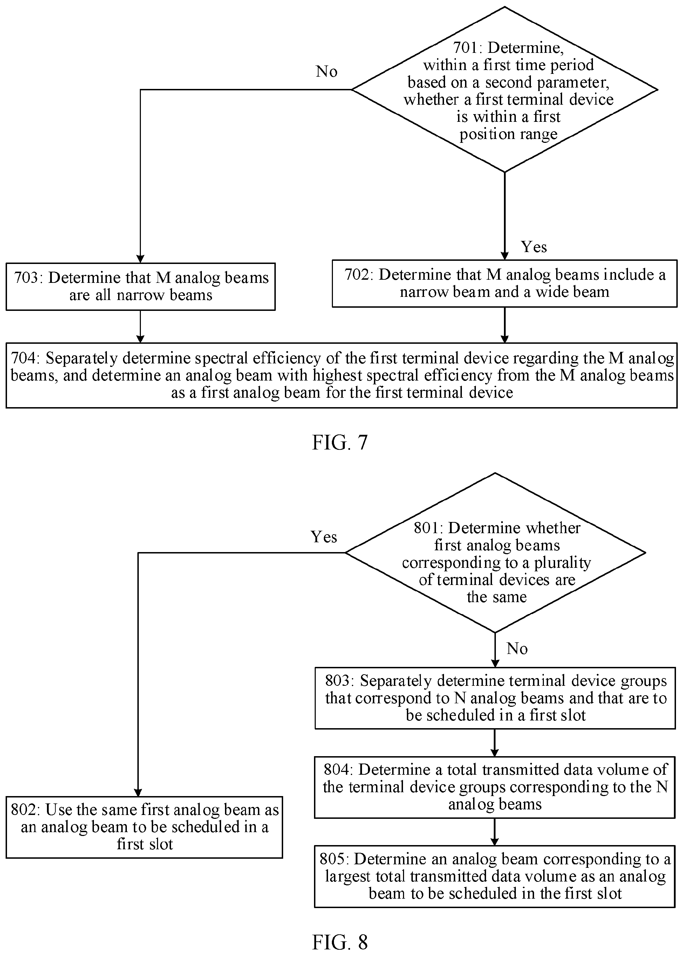

For example, FIG. 7 shows another example communication method. The example may be applied to a single-user scenario, or may be applied to a terminal device with a high user level in a multi-user scenario. An access network device may adaptively send a wide analog beam and a narrow analog beam depending on whether a first terminal device is at a near point, to ensure experience of the first terminal device and far-point coverage. As shown in FIG. 7, a specific procedure of the example may include the following steps.

Step 701: The access network device determines, within a first time period based on a second parameter, whether the first terminal device is within a first position range. If the first terminal device is within the first position range, step 702 is performed; otherwise, step 703 is performed.

Optionally, for the method in which the access network device determines, within the first time period based on the second parameter, whether the first terminal device is within the first position range, refer to related descriptions in the embodiment shown in FIG. 3. Details are not described herein again.

Step 702: The access network device determines that M analog beams include a narrow beam and a wide beam. To be specific, the access network device adds the wide beam for sweeping within the first time period, and the M analog beams swept within the first time period include the narrow beam and the wide beam.

Optionally, there may be one or more wide beams.

Step 703: The access network device determines that M analog beams are all narrow beams. To be specific, the access network device does not add a wide beam for sweeping within the first time period, and performs sweeping on the M narrow beams within the first time period.

Step 704: The access network device may separately determine spectral efficiency of the first terminal device regarding the M analog beams, and determine an analog beam with highest spectral efficiency from the M analog beams as a first analog beam for the first terminal device.

Subsequently, the access network device performs sweeping on the first analog beam for the first terminal device within a second time period.

In an optional implementation, in the single-user scenario, a beam swept by the access network device within the second time period is the first analog beam for the first terminal device.

In another optional implementation, in the multi-user scenario, N analog beams swept by the access network device within the second time period include the first analog beam for the first terminal device.

Based on the method in the example, the access network device may identify a channel characteristic of a user, and adaptively select a wide analog beam and a narrow analog beam based on the channel characteristic of the user, to ensure high-level multipath performance for a near-point user and coverage performance for a far-point user.

For example, FIG. 8 shows another example communication method. In the example, in a process of sweeping N analog beams within a second time period, in different slots, an access network device may adaptively select, based on correlation among a plurality of users and a channel characteristic, analog beams to be scheduled in the different slots, to achieve good communication performance. Specifically, refer to FIG. 8. A specific procedure of the example may include the following steps.

Step 801: The access network device determines whether first analog beams corresponding to a plurality of terminal devices are the same. If the first analog beams are the same, step 802 is performed; otherwise, step 803 is performed.

Step 802: The access network device uses the same first analog beam as an analog beam to be scheduled in a first slot.

Step 803: The access network device separately determines terminal device groups that correspond to N analog beams and that are to be scheduled in a first slot.

Step 803 may also be understood as that the access network device establishes a terminal device group for any one of the N analog beams.

Step 804: The access network device determines a total transmitted data volume of the terminal device groups corresponding to the N analog beams.

For a method in which the access network device determines the total transmitted data volume of the terminal device groups corresponding to the N analog beams, refer to related descriptions in the embodiment shown in FIG. 3. Details are not described herein again.

Step 805: The access network device determines an analog beam corresponding to a largest total transmitted data volume as an analog beam to be scheduled in the first slot.

Based on the foregoing example, the access network device may adaptively select, based on correlation among a plurality of users and a channel characteristic, analog beams to be scheduled in different slots, to achieve good communication performance.

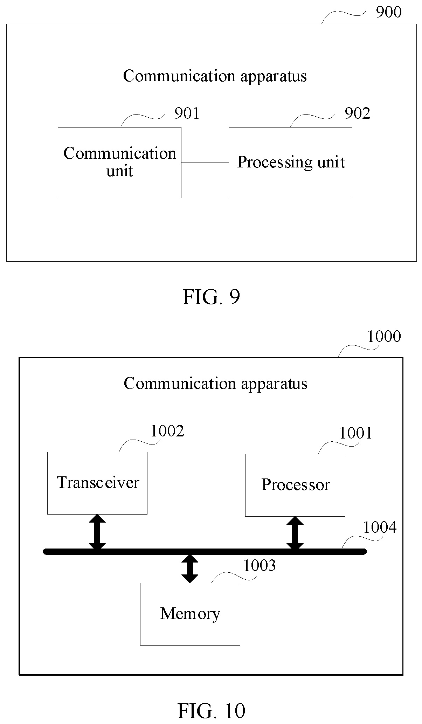

Based on the foregoing embodiments, an embodiment of this application further provides a communication apparatus. Refer to FIG. 9. A communication apparatus 900 may include a communication unit 901 and a processing unit 902, and optionally, may further include a storage unit. The communication unit 901 may be configured to receive and send information, and the like. The processing unit 902 may control and manage an action of the communication apparatus 900. The storage unit is configured to store program instructions. For example, the processing unit 902 is configured to invoke the program instructions in the storage unit to control and manage the action of the communication apparatus 900. The processing unit 902 may further control an operation performed by the communication unit 901.

For example, the communication apparatus 900 may be the access network device in the foregoing embodiments, a processor in the access network device, a chip, a chip system, a functional module, or the like.

In an embodiment, when the communication apparatus 900 is configured to implement a function of the access network device in the foregoing embodiments, the following may be included: The processing unit 902 is configured to perform the following operations: determining N analog beams within a first time period, performing sweeping on the N analog beams within a second time period, and determining, from the N analog beams, an analog beam to be scheduled in a first slot. The N analog beams are a part of M analog beams, the M analog beams are beams available to the access network device, N is an integer greater than or equal to 1, and M is an integer greater than or equal to 1. The second time period follows the first time period, and the second time period is adjacent to the first time period.

In an optional implementation, when determining the N analog beams within the first time period, the processing unit 902 may be configured to: determine, within the first time period, a user proportion or a transmitted data volume proportion of at least one of the M analog beams; sort the at least one analog beam in descending order of the user proportion or the transmitted data volume proportion; and determine the first N sorted analog beams as the N analog beams.

Optionally, when determining, within the first time period, the user proportion or the transmitted data volume proportion of the at least one of the M analog beams, the processing unit 902 may be configured to: determine a first analog beam for a terminal device based on first parameters of the terminal device regarding different analog beams; and determine the user proportion of the at least one analog beam based on a corresponding quantity of terminal devices in the case of the at least one analog beam serving as the first analog beam, or determine the transmitted data volume proportion of the at least one analog beam based on a corresponding sum of transmitted data volumes of terminal devices in the case of the at least one analog beam serving as the first analog beam.

In an example, the first parameters are reference signal strength. When determining the first analog beam for the terminal device based on the first parameters of the terminal device regarding the different analog beams, the processing unit 902 may be configured to determine an analog beam with greatest reference signal strength of the terminal device as the first analog beam for the terminal device.

In another example, the first parameter is one or more of the following: a channel quality indicator, a matrix rank indicator, or a signal-to-noise ratio.

Optionally, when determining the first analog beam for the terminal device based on the first parameters of the terminal device regarding the different analog beams, the processing unit 902 may be configured to: determine spectral efficiency of different analog beams based on the first parameters of the terminal device regarding the different analog beams; and determine an analog beam with highest spectral efficiency as the first analog beam for the terminal device.

In an optional implementation, when determining the N analog beams within the first time period, the processing unit 902 may be configured to determine, within the first time period, that the N analog beams include a first analog beam for a first terminal device.

Optionally, the processing unit 902 may be further configured to: determine, within the first time period based on a second parameter, whether the first terminal device is within a first position range; and if the first terminal device is not within the first position range, determine that the M analog beams are all narrow beams; or if the first terminal device is within the first position range, determine that the M analog beams include a narrow beam and a wide beam.

For example, the second parameter is one or more of the following: reference signal strength, multipath angular spread, a path loss, a channel quality indicator, a matrix rank indicator, or a signal-to-noise ratio.

In a possible manner, the processing unit 902 may be further configured to: separately determine spectral efficiency of the first terminal device regarding the M analog beams; and determine an analog beam with highest spectral efficiency regarding the M analog beams as the first analog beam for the first terminal device; or the processing unit 902 may be further configured to determine an analog beam with greatest reference signal strength of the first terminal device as the first analog beam for the first terminal device.

In an example, when separately determining the spectral efficiency of the first terminal device regarding the M analog beams, the processing unit 902 may be configured to separately determine the spectral efficiency of the first terminal device regarding the M analog beams based on one or more of the following parameters: a channel quality indicator, a matrix rank indicator, or a signal-to-noise ratio of the first terminal device.

For example, when determining, from the N analog beams, the analog beam to be scheduled in the first slot, the processing unit 902 may be configured to determine whether first analog beams corresponding to a plurality of terminal devices are the same; and if the first analog beams are the same, use the same first analog beam as the analog beam to be scheduled in the first slot; or if the first analog beams are different, determine, based on a transmitted data volume corresponding to the N analog beams, the analog beam to be scheduled in the first slot.

In a possible manner, when determining, based on the transmitted data volume corresponding to the N analog beams, the analog beam to be scheduled in the first slot, the processing unit 902 may be configured to: separately determine a terminal device group that corresponds to at least one of the N analog beams and that is to be scheduled in the first slot; determine a total transmitted data volume of the terminal device group corresponding to the at least one analog beam; and determine an analog beam corresponding to a largest total transmitted data volume as the analog beam to be scheduled in the first slot.

For example, when determining the total transmitted data volume of the terminal device group corresponding to the at least one analog beam, the processing unit 902 may be configured to: determine a transmitted data volume of at least one terminal device in the terminal device group based on at least one of a channel quality indicator, a matrix rank indicator, or a signal-to-noise ratio of the at least one terminal device; and determine the total transmitted data volume of the terminal device group based on the transmitted data volume of the at least one terminal device.

It should be noted that, in this embodiment of this application, division into the units is an example, and is merely logical function division. In an actual implementation, another division manner may be used. Functional units in this embodiment of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in a form of a software product. The computer software product is stored in a storage medium and includes several instructions for instructing a computer device (which may be a personal computer, a server, a network device, or the like) or a processor (processor) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. Refer to FIG. 10. A communication apparatus 1000 may include a processor 1001. Optionally, the communication apparatus 1000 may further include a transceiver 1002 and/or a memory 1003. The memory 1003 may be disposed inside the communication apparatus 1000, or may be disposed outside the communication apparatus 1000. The processor 1001 may control the transceiver 1002 to receive and send information, a message, data, or the like.

Specifically, the processor 1001 may be a central processing unit (central processing unit, CPU), a network processor (network processor, NP), or a combination of the CPU and the NP. The processor 1001 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), generic array logic (generic array logic, GAL), or any combination thereof.

The transceiver 1002, the processor 1001, and the memory 1003 are connected to each other. Optionally, the transceiver 1002, the processor 1001, and the memory 1003 are connected to each other through a bus 1004. The bus 1004 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of representation, only one thick line is used for representing the bus in FIG. 10, but this does not mean that there is only one bus or only one type of bus.

In an optional implementation, the memory 1003 is configured to store a program and the like. Specifically, the program may include program code, and the program code includes computer operation instructions. The memory 1003 may include a RAM, and may further include a non-volatile memory (non-volatile memory), for example, one or more magnetic disk memories. The processor 1001 executes an application program stored in the memory 1003 to implement the foregoing function, to implement a function of the communication apparatus 1000.

For example, the communication apparatus 1000 may be the access network device in the foregoing embodiments.

In an embodiment, when the communication apparatus 1000 implements the function of the access network device in the embodiments shown in FIG. 3 and FIG. 6 to FIG. 8, the processor 1001 may implement the operations performed by the access network device in the embodiments shown in FIG. 3 and FIG. 6 to FIG. 8. For specific related descriptions, refer to related descriptions in the embodiments shown in FIG. 3 and FIG. 6 to FIG. 8. Details are not described herein again.

Based on the foregoing embodiments, an embodiment of this application provides a communication system. The communication system may include the access network device and the like in the foregoing embodiments.

An embodiment of this application further provides a computer-readable storage medium. The computer-readable storage medium is configured to store a computer program. When the computer program is executed by a computer, the computer may implement the communication method provided in the method embodiments.

An embodiment of this application further provides a computer program product. The computer program product is configured to store a computer program. When the computer program is executed by a computer, the computer may implement the communication method provided in the method embodiments.

An embodiment of this application further provides a chip, including a processor. The processor is coupled to a memory, and is configured to invoke a program in the memory, to enable the chip to implement the communication method provided in the method embodiments.

An embodiment of this application further provides a chip. The chip is coupled to a memory, and the chip is configured to implement the communication method provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of procedures and/or blocks in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of the another programmable data processing device generate an apparatus for implementing a specific function in one or more procedures in the flowcharts and/or in one or more blocks in the block diagrams.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A communication method, comprising:
determining N analog beams within a first time period, wherein the N analog beams are a part of M analog beams, the M analog beams are beams available to the access network device, N is an integer greater than or equal to 1, and M is an integer greater than or equal to 1;
performing sweeping on the N analog beams within a second time period, wherein the second time period follows the first time period, and the second time period is adjacent to the first time period; and
determining, from the N analog beams, an analog beam to be scheduled in a first slot.

2. The method according to claim 1, wherein determining the N analog beams within the first time period comprises:
determining, within the first time period, a user proportion or a transmitted data volume proportion of at least one of the M analog beams;
sorting the at least one analog beam in descending order of the user proportion or the transmitted data volume proportion; and
determining the first N sorted analog beams as the N analog beams.

3. The method according to claim 2, wherein determining, within the first time period, the user proportion or the transmitted data volume proportion of the at least one of the M analog beams comprises:
determining a first analog beam for a terminal device based on first parameters of the terminal device regarding different analog beams; and
determining the user proportion of the at least one analog beam based on a corresponding quantity of terminal devices in the case of the at least one analog beam serving as the first analog beam; or determining the transmitted data volume proportion of the at least one analog beam based on a corresponding sum of transmitted data volumes of terminal devices in the case of the at least one analog beam serving as the first analog beam.

4. The method according to claim 3, wherein the first parameters are reference signal strength, and determining the first analog beam for the terminal device based on the first parameters of the terminal device regarding the different analog beams comprises:
determining an analog beam with greatest reference signal strength of the terminal device as the first analog beam for the terminal device.

5. The method according to claim 3, wherein the first parameter is one or more of the following: a channel quality indicator, a matrix rank indicator, or a signal-to-noise ratio.

6. The method according to claim 5, wherein determining the first analog beam for the terminal device based on the first parameters of the terminal device regarding the different analog beams comprises:
determining spectral efficiency of the different analog beams based on the first parameters of the terminal device regarding the different analog beams; and
determining an analog beam with highest spectral efficiency as the first analog beam for the terminal device.

7. The method according to any one of claims 1 to 6, wherein determining the N analog beams within the first time period comprises:
determining, within the first time period, that the N analog beams comprise a first analog beam for a first terminal device.

8. The method according to claim 7, wherein the method further comprises:
determining, within the first time period based on a second parameter, whether the first terminal device is within a first position range; and
if the first terminal device is not within the first position range, determining that the M analog beams are all narrow beams; or
if the first terminal device is within the first position range, determining that the M analog beams comprise a narrow beam and a wide beam.

9. The method according to claim 8, wherein the second parameter is one or more of the following: reference signal strength, multipath angular spread, a path loss, a channel quality indicator, a matrix rank indicator, or a signal-to-noise ratio.

10. The method according to any one of claims 7 to 9, wherein the method further comprises:
separately determining spectral efficiency of the first terminal device regarding the M analog beams; and determining an analog beam with highest spectral efficiency from the M analog beams as the first analog beam for the first terminal device; or
determining an analog beam with greatest reference signal strength of the first terminal device as the first analog beam for the first terminal device.

11. The method according to claim 10, wherein separately determining the spectral efficiency of the first terminal device regarding the M analog beams comprises:
separately determining the spectral efficiency of the first terminal device regarding the M analog beams based on one or more of the following parameters: a channel quality indicator, a matrix rank indicator, or a signal-to-noise ratio of the first terminal device.

12. The method according to any one of claims 1 to 11, wherein determining, from the N analog beams, the analog beam to be scheduled in the first slot comprises:
determining whether first analog beams corresponding to a plurality of terminal devices are the same; and
if the first analog beams are the same, using the same first analog beam as the analog beam to be scheduled in the first slot; or
if the first analog beams are different, determining, based on a transmitted data volume corresponding to the N analog beams, the analog beam to be scheduled in the first slot.

13. The method according to claim 12, wherein determining, based on the transmitted data volume corresponding to the N analog beams, the analog beam to be scheduled in the first slot comprises:
separately determining a terminal device group that corresponds to at least one of the N analog beams and that is to be scheduled in the first slot;
determining a total transmitted data volume of the terminal device group corresponding to the at least one analog beam; and
determining an analog beam corresponding to a largest total transmitted data volume as the analog beam to be scheduled in the first slot.

14. The method according to claim 13, wherein determining the total transmitted data volume of the terminal device group corresponding to the at least one analog beam comprises:
determining a transmitted data volume of at least one terminal device in the terminal device group based on at least one of a channel quality indicator, a matrix rank indicator, or a signal-to-noise ratio of the at least one terminal device; and
determining the total transmitted data volume of the terminal device group based on the transmitted data volume of the at least one terminal device.

15. A communication apparatus, comprising a module or a unit configured to perform the method according to any one of claims 1 to 14.

16. A communication apparatus, comprising a memory and a processor, wherein
the memory is configured to store computer instructions; and
the processor is coupled to the memory, and is configured to invoke the computer instructions in the memory, to cause the communication apparatus to perform the method according to any one of claims 1 to 14.

17. A computer-readable storage medium, wherein the computer-readable storage medium stores computer-executable instructions, and when the computer-executable instructions are invoked by the computer, the computer is caused to perform the method according to any one of claims 1 to 14.

18. A computer program product, comprising instructions, wherein when the instructions are run on a computer, the method according to any one of claims 1 to 14 is performed.

19. A chip, wherein the chip is coupled to a memory, and is configured to read and execute program instructions stored in the memory, to implement the method according to any one of claims 1 to 14.
